# FASCICULE DE BREVET EUROPEEN

(11) **EP 1 076 003 B1**
(45) Date de publication et mention de la délivrance du brevet: **07.04.2004**
(21) Numéro de dépôt: 00402165.5
(22) Date de dépôt: 27.07.2000
(51) Int. Cl.: B62J 9/00

(54) **Dispositif de fixation d'un objet, en particulier d'une sacoche, sur un réservoir de motocyclette**
Vorrichtung zur Befestigung eines Gegenstandes, insbesondere einer Tasche, auf einem Motorradtank
Device for attaching an object, in particular a bag, onto a motorcycle tank

(30) Priorité: 09.08.1999 FR 9910328
(43) Date de publication de la demande: 14.02.2001
(73) Titulaire: Bagster SA, 61600 La Ferte Mace (FR)
(72) Inventeur: Courtois, Gilles, 61600 La Sauvagere (FR); Laurent, Eric, 48140 Saint Privat Du Fau (FR); Millet, Dominique, 75012 Paris (FR)
(74) Mandataire: Bezault, Jean

(56) Documents cités:
- FR-A- 2 234 173
- FR-A- 2 760 714

## Description

L'invention se rapporte aux accessoires pour motocyclettes et analogues.

Elle concerne plus particulièrement un dispositif pour la fixation d'un objet, en particulier d'une sacoche, sur un réservoir de motocyclette.

Le document FR-A-2 760 714 décrit un dispositif de fixation d'un objet sur un réservoir de motocyclette selon le préambule de la revendication 1.

Il est connu d'équiper une motocyclette d'un porte-bagages arrière, conçu essentiellement pour porter des bagages derrière la selle du passager ou bien sur cette selle.

Ces porte-bagages peuvent aussi servir à fixer d'autres objets au moyen de sangles, tendeurs et analogues. Il en résulte alors un risque de déséquilibre de la motocyclette et l'inconvénient supplémentaire, dans certains cas, de ne pas permettre d'accueillir un passager car le porte-bagages empiète, sur certaines motos, sur la selle du passager.

Sur de nombreuses motocyclettes, il n'existe pas de place suffisante pour un porte-bagages et le seul espace disponible se situe alors sur le réservoir.

Il existe aussi des protège-réservoirs qui reprennent la forme du réservoir et qui permettent de le protéger contre les rayures et de fixer différentes sacoches. Toutefois, l'installation et la désinstallation de tels protège-réservoirs sont assez longues et ils ne permettent pas de fixer d'autres objets sur la motocyclette. En outre, lorsque le motard veut remplir son réservoir, il est alors obligé d'enlever la sacoche pour avoir accès au bouchon de remplissage, ou de la maintenir à la main.

Il est connu aussi de fixer des sacoches sur le réservoir par des aimants, des sangles, des tendeurs, etc... qui risquent d'endommager le réservoir. En outre, l'installation et la désinstallation de ces sacoches sont assez longues, notamment dans le cas d'une fixation par des sangles ou des tendeurs. De plus ces sacoches ne sont pas stables à grande vitesse et elles sont peu esthétiques.

L'invention a notamment pour but de surmonter les inconvénients précités.

Elle vise en particulier à procurer un dispositif de fixation formant support universel et permettant de fixer différents objets, et non pas uniquement des sacoches, sur le réservoir en les maintenant dans une position désirée quelconque.

L'invention vise également à procurer un tel dispositif de fixation qui permet une installation et une désinstallation rapides de l'objet.

Elle vise aussi à procurer un tel dispositif de fixation qui permet de fixer un grand nombre d'objets et qui, en outre, ne risque pas d'endommager le réservoir de la motocyclette.

L'invention propose à cet effet un dispositif de fixation tel que défini dans la revendication 1.

Ainsi, le dispositif de l'invention comprend pour l'essentiel un support qui est fixé à un élément fixe de la motocyclette, en particulier au châssis, et qui permet de fixer différents types d'objets en offrant un montage articulé, ce qui permet de faire pivoter l'objet et de le placer dans une position choisie parmi une infinité de positions.

Ce dispositif permet de fixer différents objets tels que, par exemple, des sacoches de tous types, mais aussi d'autres produits comme un attaché case, une trousse de secours, une trousse de bricolage, un système de positionnement, un casque, un antivol, un téléphone mobile, une carte routière, une bulle de réflexion d'air, un dispositif de protection des jambes contre la pluie, etc.

Le dispositif de l'invention comprend des moyens de verrouillage propres à bloquer l'objet dans une position choisie.

Selon une autre caractéristique de l'invention, le support est conçu pour rester à demeure sur la motocyclette, tandis que les seconds moyens d'attache sont séparables facilement des premiers moyens d'attache pour permettre un montage ou un démontage de l'objet.

On prévoit alors avantageusement que le support comprend une première partie, ou partie basse, propre à être fixée sur la motocyclette et, une seconde partie, ou partie haute, qui porte les premiers moyens d'attache.

La première partie et la deuxième partie peuvent être formées d'une pièce unique ou bien de deux pièces assemblées entre elles.

Dans une première forme de réalisation de l'invention, les premiers moyens d'attache comprennent deux pattes espacées faisant partie du support dans lesquelles sont vissés respectivement deux axes filetés disposés coaxialement pour définir l'axe de pivotement et dirigés vers l'extérieur, en étant munis d'organes de serrage respectifs, tandis que les seconds moyens d'attache comprennent deux fourches espacées propres à être engagées chacune autour d'un axe fileté et dans l'espace délimité entre la patte et l'organe de serrage correspondants.

Dans une deuxième forme de réalisation de l'invention, les premiers moyens d'attache comprennent deux pattes espacées faisant partie du support, dont l'une porte une broche et dont l'autre reçoit un axe fileté muni d'un organe de serrage, en sorte que la broche et l'axe filetés sont disposés coaxialement pour définir l'axe de pivotement, tandis que les seconds moyens d'attache comprennent deux pattes espacées dont l'une est munie d'un trou pour l'engagement de la broche et l'autre a la forme d'une fourche propre à être engagée autour de l'axe fileté et dans l'espace délimité entre la patte et l'organe de serrage correspondants.

Dans une troisième forme de réalisation de l'invention, les premiers moyens d'attache comprennent un tube comportant une partie fendue et un collier de serrage entourant ladite partie fendue, le tube s'étendant dans la direction de l'axe de pivotement, tandis que les seconds moyens d'attache comprennent une tige propre à être engagée dans le tube et à être bloquée en position par serrage du collier.

Dans une quatrième forme de réalisation de l'invention, les premiers moyens d'attache comprennent deux pattes espacées faisant partie du support, dont l'une porte un cliquet réversible muni d'une première broche et l'autre porte une deuxième broche, ces broches étant disposées coaxialement pour définir l'axe de pivotement, tandis que les seconds moyens d'attache comprennent deux fourches espacées propres à recevoir respectivement la première broche et la deuxième broche.

Dans une cinquième forme de réalisation de l'invention, les premiers moyens d'attache comprennent deux pattes espacées faisant partie du support, dont l'une porte un cliquet réversible muni d'une première broche et l'autre porte une deuxième broche, ces broches étant solidaires d'un bloc de verrouillage et étant disposées coaxialement pour définir l'axe de pivotement, tandis que les seconds moyens d'attache comprennent une tige propre à s'engager dans une fente du bloc de verrouillage et à être maintenue par un organe de verrouillage.

Le support peut, quant à lui, être fixé de différents moyens:
- le support est fixé par au moins une vis sur une face supérieure de l'élément fixe de la motocyclette;
- le support comprend une partie engagée et maintenue dans un espace libre entre l'élément fixe de la motocyclette et une face inférieure du réservoir;
- le support est fixé par un collier autour de la colonne de direction de la motocyclette;
- le support est fixé par un collier autour d'un élément du châssis de la motocyclette;
- le support est fixé par des vis sur deux faces latérales du châssis de la motocyclette;
- le support est fixé par pincement d'une partie étroite du réservoir ; et
- le support est fixé par collage ou soudage.

Selon une autre caractéristique de l'invention, le support est réalisé spécifiquement en fonction de la motocyclette à laquelle il est destiné, tandis que les premiers moyens d'attache et les seconds moyens d'attache sont standards.

Selon encore une autre caractéristique de l'invention, le dispositif comprend un tampon amortisseur propre à être placé sur l'objet pour venir en appui de préférence contre le bouchon de remplissage du réservoir dans la position basse de l'objet.

Dans la description qui suit, faite seulement à titre d'exemple, on se réfère aux dessins annexés sur lesquels :
- la figure 1 est une vue partielle de côté d'une motocyclette équipée d'un dispositif de fixation selon l'invention, l'objet étant en position basse;
- la figure 2 est une vue analogue à la figure 1, l'objet étant en position haute;
- la figure 3 est une vue partielle de dessus d'un dispositif de fixation dans une première forme de réalisation de l'invention;
- la figure 4 est une vue partielle en perspective éclatée correspondant à la figure 3;
- la figure 5 est une vue partielle en perspective éclatée d'un dispositif de fixation selon une deuxième forme de réalisation de l'invention;
- la figure 6 est une vue partielle en perspective éclatée d'un dispositif de fixation selon une troisième forme de réalisation de l'invention;
- la figure 7 est une vue d'extrémité correspondant à la figure 6;
- les figures 8 à 25 illustrent différents moyens de fixation du support sur un élément fixe d'une motocyclette;
- la figure 26 est une vue partielle en perspective éclatée d'un dispositif de fixation selon une quatrième forme de réalisation de l'invention;
- la figure 27 est une vue de dessus du support de la figure 26;
- les figures 28 et 29 sont des vues en coupe prises respectivement selon les lignes XXVIII-XXVIII et XXIX-XXIV de la figure 27;
- la figure 30 est une vue de dessus des second moyens d'attache de la figure 26;
- les figures 31 et 32 sont des vues de côté correspondant à la figure 30; et
- la figure 33 est une vue partielle en perspective éclatée d'un dispositif de fixation selon une cinquième forme de réalisation de l'invention

Dans la description détaillée qui suit, il est fait référence à la fixation d'une sacoche, mais il doit être entendu que l'invention peut s'appliquer à la fixation d'autres objets, comme indiqué précédemment.

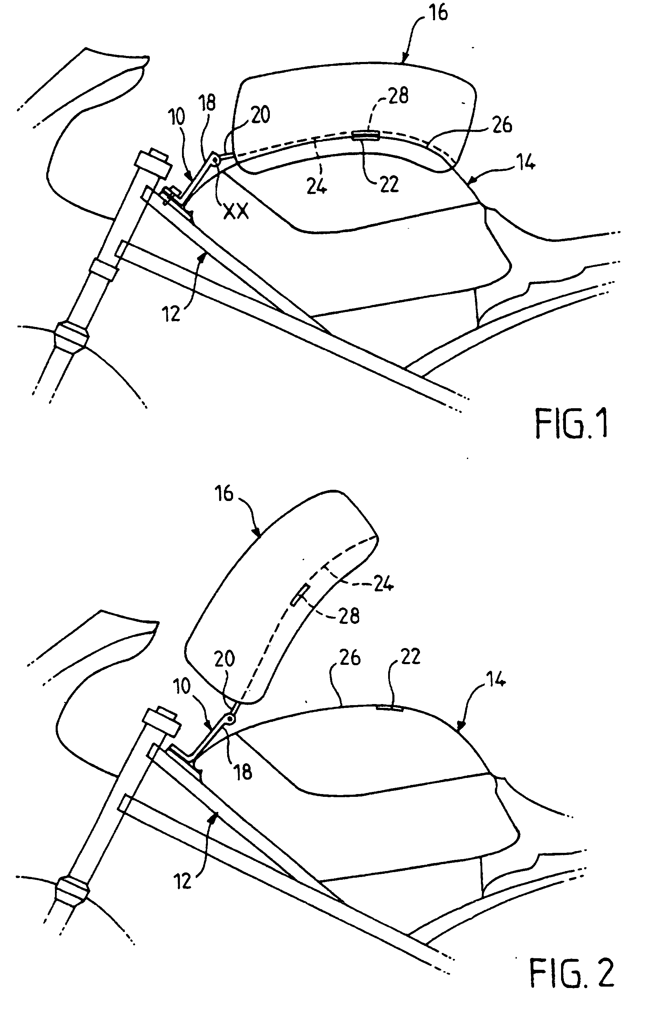

Le dispositif représenté à la figure 1 comprend un support 10 propre à être solidarisé à un élément fixe, dans l'exemple le châssis 12, d'une motocyclette, en avant du réservoir de carburant 14 de cette dernière. Le dispositif sert à la fixation d'un objet 16, ici une sacoche. Le support 10 comprend des premiers moyens d'attache 18 propres à coopérer à articulation avec des seconds moyens d'attache 20 solidaires de la sacoche 16 pour permettre de faire pivoter cet objet autour d'un axe XX qui s'étend transversalement et horizontalement, la motocyclette étant debout.

La sacoche 16 peut ainsi être placée sélectivement, soit dans une position basse proche du réservoir 14 (figure 1), soit dans au moins une position relevée éloignée du réservoir (figure 2), permettant une infinité de positions.

Dans le cas d'une sacoche, la position basse de la figure 1 correspond à une position de transport, tandis que la position haute de la figure 2 correspond à une position d'escamotage qui permet notamment d'accéder au bouchon de remplissage 22 du réservoir pour permettre d'effectuer le plein en carburant.

La sacoche 16 possède une face inférieure conformée 24 qui présente une forme homologue de celle de la face supérieure 26 du réservoir 14 pour permettre une coopération de formes dans la position basse de la figure 1.

Le dispositif comprend un tampon amortisseur 28 placé sur la face inférieure 24 de la sacoche pour venir en appui, dans la position basse, contre le bouchon de remplissage 22 ou une autre partie du réservoir 14.

Il est à noter que, pour d'autres types d'objets, en particulier pour une bulle de réflexion d'air, la position relevée correspond à la position d'utilisation ou de transport, tandis que la position basse correspond a une position escamotée.

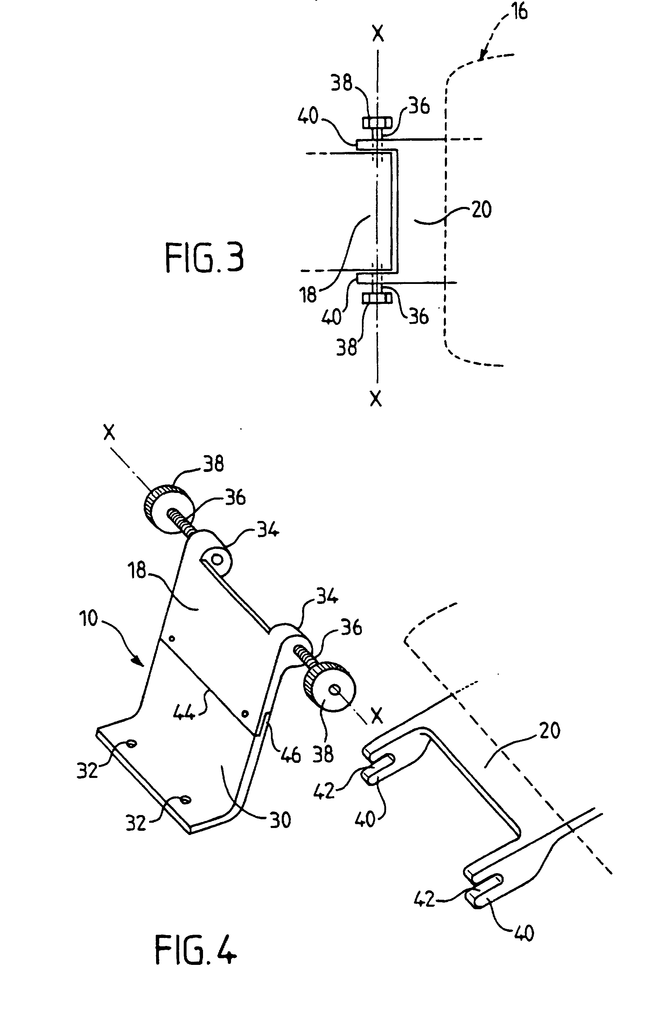

On se réfère maintenant aux figures 3 et 4 pour décrire une première forme de réalisation du support de l'invention.

Dans cette forme de réalisation, le support 10 comprend une partie inférieure 30 qui a la forme d'une patte en L munie de deux trous 32 pour la fixation sur le châssis de la motocyclette et qui porte les moyens d'attache 18.

Dans l'exemple, ces moyens d'attache 18 comprennent deux pattes espacées 34 dans lesquelles sont vissés respectivement deux axes filetés 36 disposés coaxialement pour définir l'axe de pivotement XX. Ces axes filetés 36 sont dirigés vers l'extérieur et sont munis d'organes de serrage formés par des boutons d'entraînement respectifs 38 (par exemple des molettes) permettant de visser ou dévisser les axes 36 en rapprochant ou éloignant à chaque fois le bouton 38 de la patte 34 qui lui correspond.

Les seconds moyens d'attache 20 qui sont solidaires de la sacoche 16 comprennent deux fourches espacées 40 définissant deux ouvertures respectives 42 et propres à s'engager chacune autour d'un axe fileté 36 et dans l'espace délimité entre la patte 34 et le bouton 38 correspondant.

Ainsi, lorsque les fourches 40 sont engagées autour des axes 36, et que les boutons 38 sont vissés complètement, la sacoche 16 est solidarisée au support et peut être immobilisée dans une position voulue.

Ces moyens d'attache ont notamment pour fonctions :
- de fixer la sacoche pour que celle-ci ne puisse pas avancer ou reculer ou avoir des mouvements latéraux;
- de permettre le pivotement de la sacoche par rapport à l'axe XX en soulevant l'arrière de la sacoche;
- bloquer l'articulation quand la sacoche est en appui sur le réservoir quand le motard roule afin d'éviter que l'arrière de la sacoche ne se soulève; et
- bloquer la sacoche en position haute pour que le motard ait accès au réservoir.

On comprendra que ces moyens d'attache offrent une fixation du type rapide permettant d'installer la sacoche dans une position voulue, et également de la désinstaller.

Le support 10 est fixé de façon permanente au châssis (ou autre élément fixe) par des moyens de fixation appropriés qui seront décrits plus loin.

Ce support ne peut être universel pour toutes les motocyclettes. Par contre, les moyens d'attache 18 du support et les moyens d'attache 20 solidaires de l'objet peuvent être universels, ce qui permet de simplifier les fabrications.

Comme on peut le voir sur la figure 4, les deux parties du support 10 (partie inférieure 30 et moyens d'attache 18) sont deux pièces séparées, réunies par des bords d'assemblage respectifs 44 et 46 qui sont solidarisés entre eux. Ces deux pièces ne sont pas prévues pour être séparées par le motard.

Elles pourraient, en variante, être formées d'une seule pièce.

Ainsi, pour l'installation ou la désinstallation de la sacoche, le motard doit réaliser une action de vissage ou de dévissage sur chacun des boutons 38.

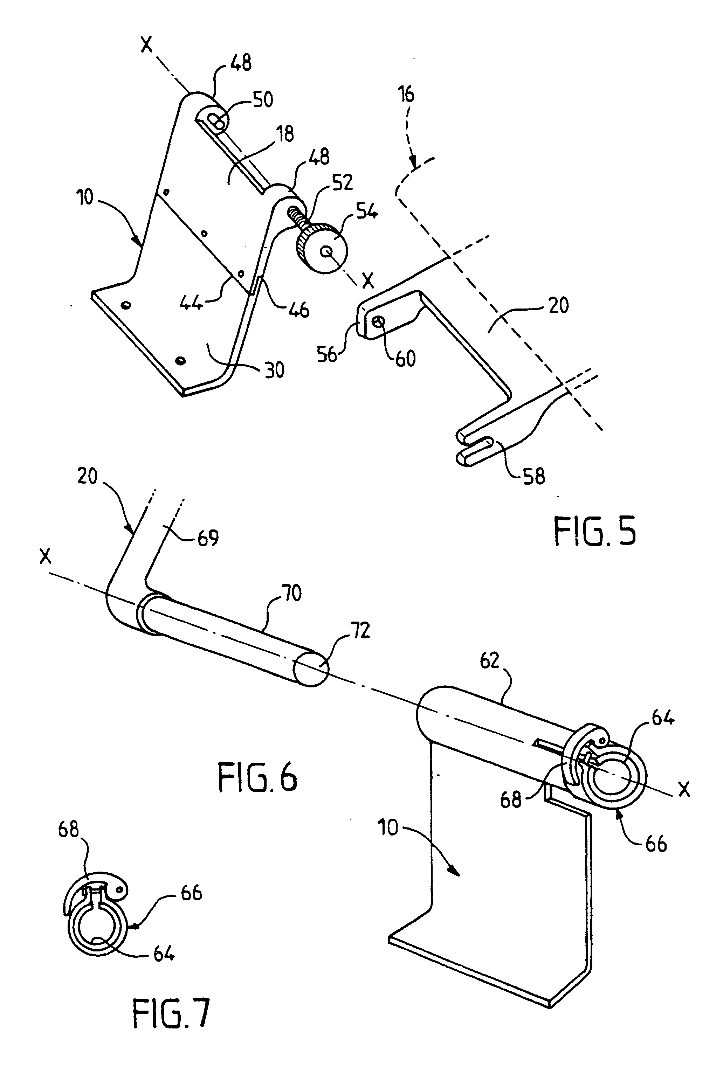

La forme de réalisation de la figure 5 constitue une variante de la précédente. Les premiers moyens d'attache 18 comprennent deux pattes espacées 48, de forme arrondie, dont l'une porte une broche 50, de faible longueur, et l'autre reçoit un axe fileté 52 muni d'un bouton d'entraînement 54, qui s'apparentent à l'axe fileté 36 et au bouton 38 de la figure 4. La broche 50 et l'axe fileté 52 sont disposés coaxialement pour définir l'axe de pivotement XX.

Les-seconds moyens d'attache 20 comprennent deux pattes espacées 56 et 58, la patte 56 étant munie d'un trou 60 pour l'engagement de la broche 50 et l'autre patte 58 a la forme d'une fourche qui s'apparente a une fourche 40 de la figure 4. Cette fourche est propre à être engagée autour de l'axe fileté 52, entre la patte 48 et le bouton d'entraînement 54.

Ainsi, pour solidariser la sacoche au support, il suffit de rapprocher les moyens d'attache 20 des moyens d'attache 18 en faisant coopérer la broche 50 et le trou 60, d'une part, et l'axe fileté 52 et la fourche 58, d'autre part.

L'installation et la désinstallation de l'objet nécessite une action de vissage ou de dévissage sur un seul bouton.

On se réfère maintenant aux figures 6 et 7 pour décrire une autre forme de réalisation de l'invention. Les premiers moyens d'attache 18 comprennent ici un tube 62 comportant une partie fendue 64 et un collier de serrage 66 entourant cette partie fendue. Le tube 62 est creux et définit un passage s'étendant dans la direction de l'axe de pivotement XX.

Les seconds moyens d'attache 20 comprennent ici une bielle 69 portant une tige transversale 70 propre à être engagée complètement dans le tube 62 jusqu'à ce que son extrémité libre 72 arrive au niveau de la partie fendue 64 du tube, dans la région du collier de serrage 66.

Ce dernier comporte une manette d'actionnement 68 (figures 6 et 7) qui permet de resserrer le collier autour de la partie fendue du tube en serrant la tige 70 et la maintenant dans la position voulue.

Les trois systèmes d'attache décrits précédemment (figure 4, figure 5, figures 6 et 7) ne constituent que des exemples parmi d'autres. Il est possible d'envisager d'autres moyens offrant une attache rapide avec blocage en position voulue de la sacoche par rapport au support solidaire du châssis ou d'un autre élément fixe de la motocyclette.

Pour des raisons de simplicité d'accès, il est préférable que les moyens de verrouillage ou de déverrouillage soient à gauche de la motocyclette quant on regarde cette motocyclette dans le sens de la motocyclette, c'est-à-dire de l'arrière à l'avant. Il s'agit du côté ou le motard descend ou monte de sa motocyclette.

On décrira maintenant différents moyens de fixation du support sur la motocyclette.

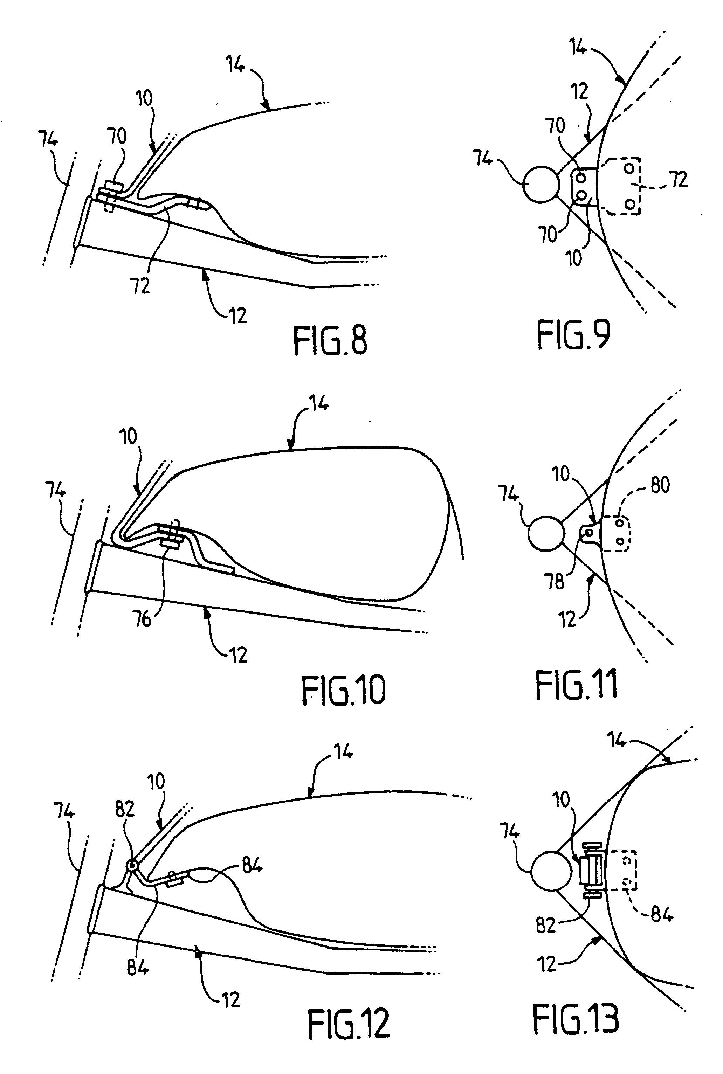

Dans la forme de réalisation des figures 8 et 9, le support 10 est fixé par deux vis verticales 70 qui servent à fixer également une patte métallique 72 du réservoir 14 sur le châssis 12 de la motocyclette. Les deux vis 70 sont placées entre le devant du réservoir et la colonne de direction 74.

Dans la forme de réalisation de la figure 10, le support 10 est fixé par deux vis verticales 76 en dessous du réservoir 14. Ces vis peuvent être fixées, soit directement sur le réservoir, soit sur le châssis.

Dans la forme de réalisation de la figure 11, le support 10 est fixé par une vis verticale 78 qui sert à fixer une patte métallique 80 du réservoir sur le châssis de la motocyclette. La vis est sur l'axe central de la motocyclette.

Dans la forme de réalisation des figures 12 et 13, le support 10 est fixé par une vis horizontale 82 qui traverse une patte 84 servant à la fixation du réservoir sur le châssis 12 de la motocyclette.

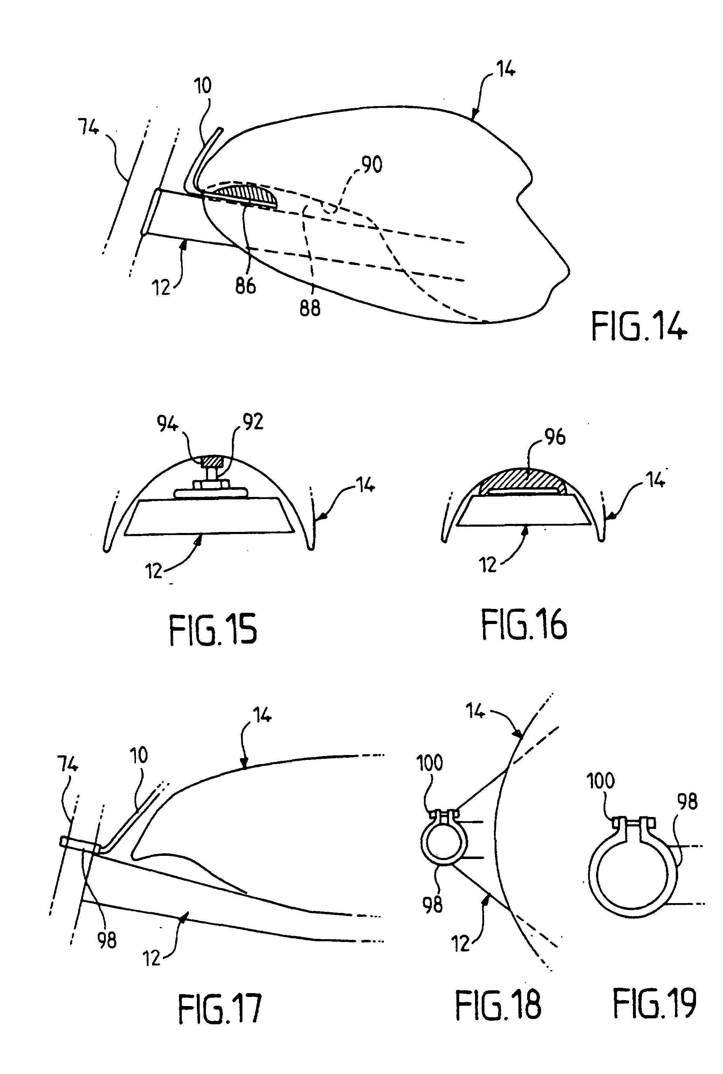

Dans la forme de réalisation de la figure 14, le support 10 comprend une extrémité 86 qui est engagée dans un espace libre 88 formé entre le châssis 12 de la motocyclette et une face inférieure 90 du réservoir.

Ce support peut être maintenu par une vis 92 réalisant un contre-appui entre le châssis 12 et le dessous du réservoir (figure 15), la vis ayant à son extrémité haute une partie caoutchoutée 94 pour ne pas endommager le réservoir.

Dans la variante de la figure 16, le support est maintenu par une matière semi-rigide 96 du type caoutchouc qui comprime la partie 86 du support contre le châssis 12.

Les formes de réalisation des figures 14 à 16 conviennent particulièrement aux motocyclettes dont le réservoir se soulève de l'avant ou bien pour les motocyclettes dont le réservoir se positionne par translation vers l'avant. Ainsi, quand le réservoir est remis en place, il comprime la partie semi-rigide ou bien l'extrémité de la vis.

Dans le cas de la figure 16, la partie semi-rigide 96 peut être réalisée par une partie expansible avec de l'air comprimé ou tout autre liquide (type chambre à air) permettant d'occuper tout l'espace et de plaquer le support contre le châssis de la motocyclette.

Dans la forme de réalisation des figures 17 à 19, le support 10 est fixé par un collier 98 autour de la colonne de direction 74 de la motocyclette. Il s'agit d'un collier fendu comprenant une vis de serrage 100 (figures 18 et 19).

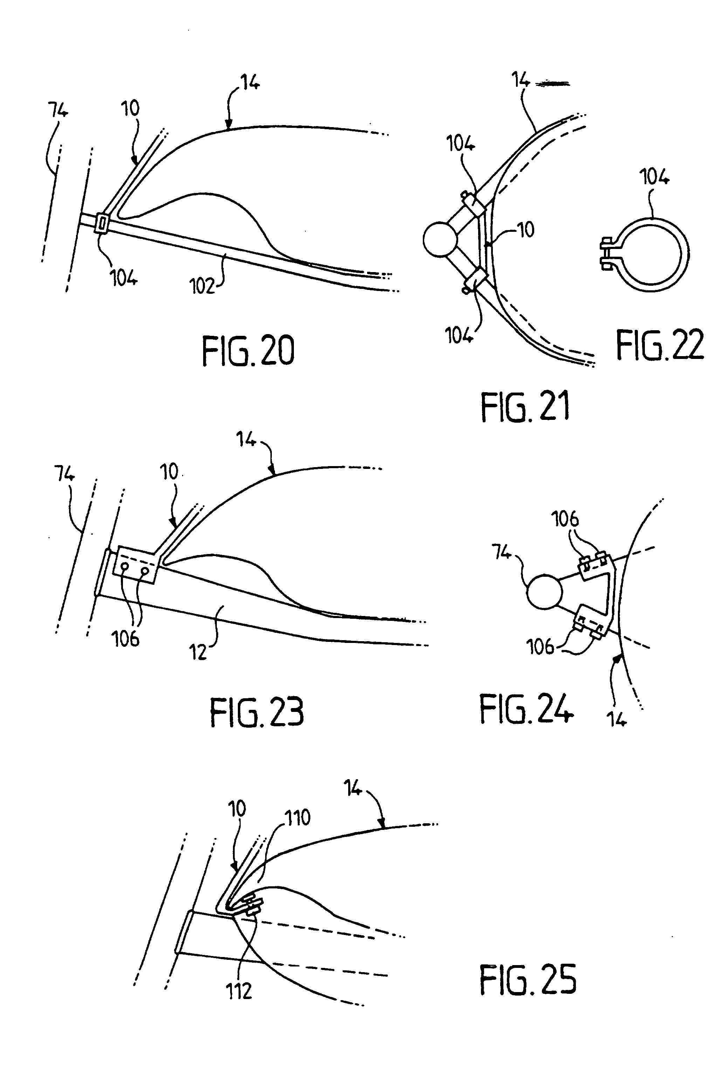

La forme de réalisation des figures 20 et 21 s'applique à une motocyclette dont le châssis comprend au moins un élément 102, par exemple tubulaire. Le support 10 est alors fixé sur un élément 102 par un collier 104 (figure 20) ou par deux colliers 104 sur deux éléments 102 du châssis. Le collier 104 est représenté à la figure 2.

Dans la forme de réalisation des figures 23 et 24, le support est fixé par des vis 106 venant se serrer sur deux faces latérales 108 du châssis.

La forme de réalisation de la figure 25 s'applique à une motocyclette dont le réservoir 14 comprend une partie fine et rigide appelée gouttière 110. Le support est fixé en pinçant cette gouttière 110 grâce à une vis 112 et le réservoir est ensuite remis en place. Si l'espace entre le châssis et le réservoir est faible, le support porte aussi sur le châssis, ce qui bloque parfaitement celui-ci.

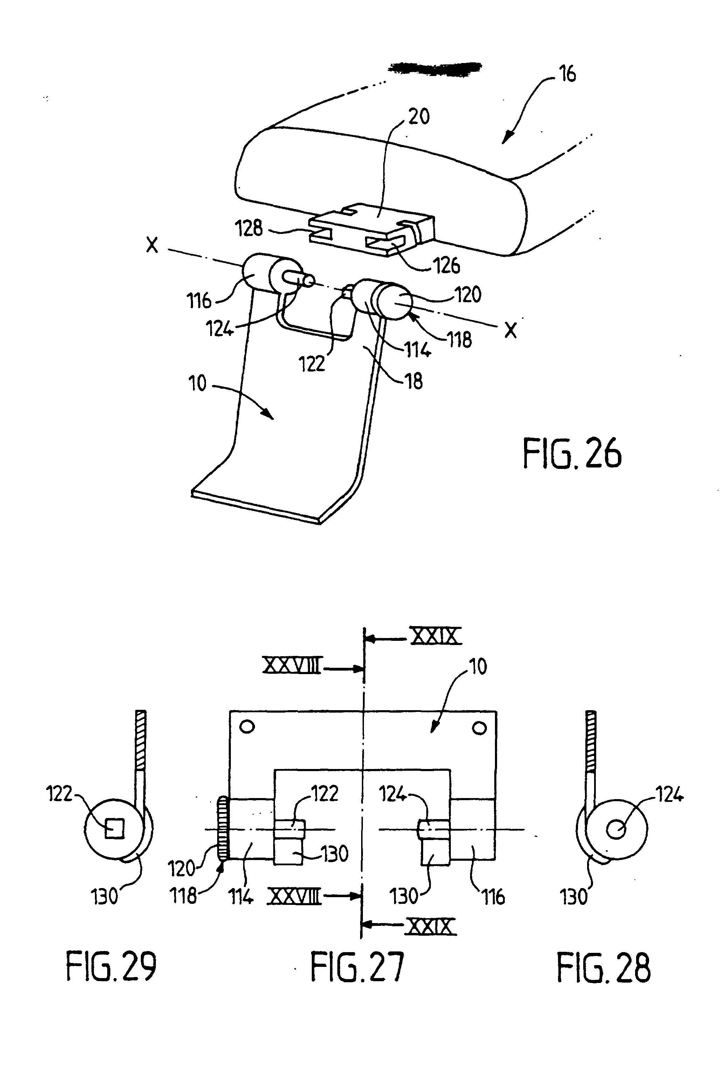

Dans la forme de réalisation des figures 26 à 29, les premiers moyens d'attache comprennent deux pattes espacées 114, 116 faisant partie du support 10. La patte 114 porte un cliquet réversible 118 semblable à ceux des clés à douille et présentant une manette 120 pour inverser le sens de rotation. il bloque donc la rotation dans un sens et permet la rotation dans l'autre sens, et inversement quand on change la position de la manette. Le cliquet comporte une broche 122 de section carrée.

La patte 116 porte une broche 124 de section circulaire disposée coaxialement avec la broche 122 pour définir l'axe de pivotement (XX).Les seconds moyens d'attache 20 comprennent deux fourches espacées 126 et 128 propres à recevoir respectivement les broches 122 et 124.

La sacoche est positionnée sur les deux broches 122 et 124 dans une position haute. Ensuite la sacoche est rabaissée, la manette 120 étant dans une position permettant un tel mouvement, si bien que des formes circulaires 130 des pattes 114 et 116 (figures 27 à 29) pénètrent dans des lumières circulaires 132 des seconds moyens d'attache 20. Une fois en position basse, la sacoche ne peut être relevée et est immobilisée. En position haute, la sacoche ne peut descendre et elle tient uniquement par gravité sur les deux broches.

La position angulaire des formes 130 doit être adaptée pour que la sacoche soit fixe en position basse et libre en position haute. Dans le cas d'un objet dont la phase d'utilisation est en position haute, les seconds moyens d'attache sont adaptés pour celà.

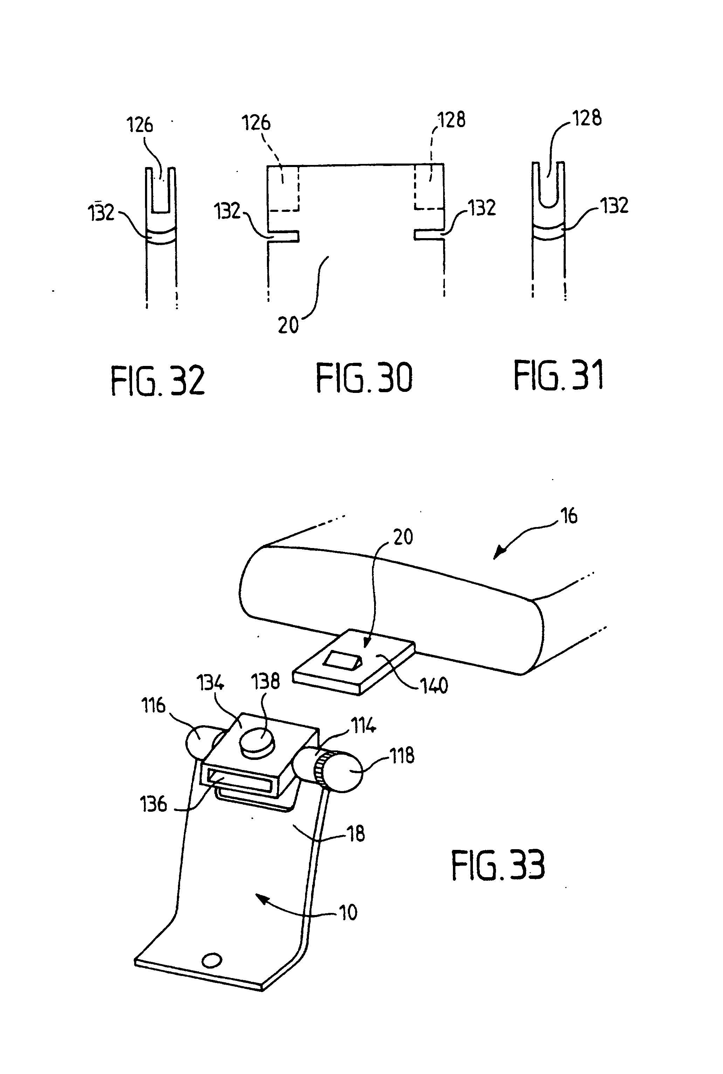

La forme de réalisation de la figure 33 constitue une variante de la précédente. Les premiers moyens d'attache comprennent deux pattes espacées 114 et 116 portant respectivement un cliquet réversible 118 muni d'une broche 122 et une deuxième broche 124. Un bloc de verrouillage 134 de forme parallèlépipédique est solidaire des broches 122 et 124. le cliquet permet ainsi de bloquer le bloc 134 une fois dans un sens une fois dans l'autre sens. Le bloc 134 comporte une fente 136 et un organe de verrouillage 138. Les seconds moyens d'attache comprennent une tige 140 propre à s'engager dans la fente 136 et à être maintenue par l'organe de verrouillage 138. Cet organe 138 permet de solidariser ou désolidariser les moyens d'attache 18 et 20.

Le support de l'invention est généralement réalisé sur mesure pour chaque modèle de motocyclette et quand celui-ci peut être en contact avec une partie visible ou non du réservoir, il comporte une mousse pour ne pas l'endommager.

## Revendications

1. Dispositif de fixation d'un objet (20), en particulier d'une sacoche, sur un réservoir de motocyclette, ledit dispositif comprenant :
un support (10) propre à être solidarisé à un élément fixe (12) de la motocyclette, en avant du réservoir (16), et comprenant des moyens de verrouillage (36, 38 ; 52, 54 ; 62, 70, 76) propres à bloquer l'objet (20) dans une position choisie, **caractérisé en ce que** ledit support comprend également des premiers moyens d'attache (18) propres à coopérer à articulation avec des seconds moyens d'attache (20) solidaires de l'objet (20), pour permettre de faire pivoter l'objet autour d'un axe (XX) et le placer sélectivement soit dans une position basse proche du réservoir, soit dans au moins une position relevée éloignée du réservoir.

2. Dispositif selon la revendication 1, **caractérisé en ce que** le support (10) est conçu pour rester à demeure sur la motocyclette, tandis que les seconds moyens d'attache (20) sont facilement séparables des premiers moyens d'attache (18) pour permettre un montage ou un démontage de l'objet.

3. Dispositif selon l'une des revendications 1 et 2, **caractérisé en ce que** le support (10) comprend une première partie, ou partie basse, (30) propre à être fixée sur la motocyclette et une seconde partie, ou partie haute, qui porte les premiers moyens d'attache (18).

4. Dispositif selon l'une des revendications 1 à 3, **caractérisé en ce que** les premiers moyens d'attache comprennent deux pattes espacées (34) faisant partie du support (10) dans lesquelles sont vissés respectivement deux axes filetés (36) disposés coaxialement pour définir l'axe de pivotement (XX) et dirigés vers l'extérieur en étant munis d'organes de serrage respectifs (38), et **en ce que** les seconds moyens d'attache comprennent deux fourches espacées (40) propres à être engagées chacune autour d'un axe fileté et dans l'espace délimité entre la patte (34) et l'organe de serrage (38) correspondants.

5. Dispositif selon l'une des revendications 1 à 3, **caractérisé en ce que** les premiers moyens d'attache comprennent deux pattes espacées (48) faisant partie du support (10), dont l'une porte une broche (50) et dont l'autre reçoit un axe fileté (52) muni d'un organe de serrage (54) en sorte que la broche et l'axe fileté sont disposés coaxialement pour définir l'axe de pivotement (XX), et **en ce que** les seconds moyens d'attache comprennent deux pattes espacées (56, 58) dont l'une (56) est munie d'un trou (60) pour l'engagement de la broche (50) et l'autre (58) a la forme d'une fourche propre à être engagée autour de l'axe fileté et dans l'espace délimité entre la patte et l'organe de serrage correspondants.

6. Dispositif selon l'une des revendications 1 à 3, **caractérisé en ce que** les premiers moyens d'attache comprennent un tube (62) comportant une partie fendue (64) et un collier de serrage (66) entourant ladite partie fendue, ledit tube (62) s'étendant dans la direction de l'axe de pivotement (XX), et **en ce que** les seconds moyens d'attache comprennent une tige (70) propre à être engagée dans le tube et à être bloquée en position par serrage du collier (66).

7. Dispositif selon l'une des revendications 1 à 3, **caractérisé en ce que** les premiers moyens d'attache comprennent deux pattes espacées (114, 116) faisant partie du support (10), dont l'une porte un cliquet réversible (118) muni d'une première broche (122) et l'autre porte une deuxième broche (124), ces broches étant disposées coaxialement pour définir l'axe de pivotement (XX), et **en ce que** les seconds moyens d'attache comprennent deux fourches espacées (126, 128) propres à recevoir respectivement la première broche et la deuxième broche.

8. Dispositif selon l'une des revendications 1 à 3, **caractérisé en ce que** les premiers moyens d'attache comprennent deux pattes espacées (114, 116) faisant partie du support (10), dont l'une porte un cliquet réversible (118) muni d'une première broche (122) et l'autre porte une deuxième broche (124), ces broches étant solidaires d'un bloc de verrouillage (134) et étant disposées coaxialement pour définir l'axe de pivotement (XX), et **en ce que** les seconds moyens d'attache comprennent une tige (140) propre à s'engager dans une fente (136) du bloc de verrouillage et à être maintenue par un organe de verrouillage (138).

9. Dispositif selon l'une des revendications 1 à 8, **caractérisé en ce que** le support (10) est propre à être fixé par au moins une vis (70 ; 76 ; 78 ; 82) sur une face supérieure de l'élément fixe (12) de la motocyclette.

10. Dispositif selon l'une des revendications 1 à 8, **caractérisé en ce que** le support (10) comprend une partie (86) propre à être engagée et maintenue dans un espace libre (88) entre l'élément fixe (12) de la motocyclette et une face inférieure (90) du réservoir (16).

11. Dispositif selon l'une des revendications 1 à 8, **caractérisé en ce que** le support (10) est propre à être fixé par un collier (98) autour de la colonne de direction (74) de la motocyclette.

12. Dispositif selon l'une des revendications 1 à 8, **caractérisé en ce que** le support (10) est propre à être fixé par un collier (104) autour d'un élément 102) du châssis de la motocyclette.

13. Dispositif selon l'une des revendications 1 à 8, **caractérisé en ce que** le support (10) est propre à être fixé par des vis (106) sur deux faces latérales (108) du châssis (112) de la motocyclette.

14. Dispositif selon l'une des revendications 1 à 8, **caractérisé en ce que** le support (10) est propre à être fixé par pincement d'une partie étroite (110) du réservoir.

15. Dispositif selon l'une des revendications 1 à 14, **caractérisé en ce que** le support (10) est réalisé spécifiquement en fonction de l'élément fixe (12) de la motocyclette à laquelle il est destiné, tandis que les premiers moyens d'attache (18) sont universels.

16. Dispositif selon l'une des revendications 1 à 15, **caractérisé en ce qu'**il comprend un tampon amortisseur (28) propre à être placé sur l'objet pour venir en appui de préférence contre le bouchon de remplissage (22) du réservoir (16) dans la position basse de l'objet.

## Patentansprüche

1. Vorrichtung zur Befestigung eines Gegenstandes (20), insbesondere einer Tasche, auf einem Motorradtank, wobei die Vorrichtung aufweist:
eine Stütze (10), die in der Lage ist, mit einem festen Element (12) des Motorrads, vor dem Tank (16), verbunden zu werden, und mit Verriegelungseinrichtungen (36, 38; 52, 54; 62, 70, 76), die in der Lage sind, den Gegenstand (20) in einer gewählten Position zu blockieren, **dadurch gekennzeichnet, daß** die Stütze ebenfalls erste Anhängeinrichtungen (18) aufweist, die in der Lage sind, beim Anlenken mit zweiten Anhängeinrichtungen (20), die mit dem Gegenstand (20) verbunden sind, zusammenzuwirken, um zu ermöglichen, daß der Gegenstand um eine Achse (XX) schwenkt und ihn wahlweise in einer unteren Position, in der Nähe des Tanks, oder in wenigstens einer erhöhten Position, entfernt von dem Tank zu plazieren.

2. Vorrichtung nach Anspruch 1, **dadurch gekennzeichnet, daß** die Stütze (10) derart konzipiert ist, daß sie feststehend auf dem Motorrad verbleibt, während die zweiten Anhängeinrichtungen (20) leicht von den ersten Anhängeinrichtungen (18) trennbar sind, um eine Montage oder Demontage des Gegenstandes zu ermöglichen.

3. Vorrichtung nach Anspruch 1 oder 2, **dadurch gekennzeichnet, daß** die Stütze (10) einen ersten Abschnitt, oder einen unteren Abschnitt, (30), der geeignet ist, auf dem Motorrad befestigt zu werden, und einen zweiten Abschnitt, oder oberen Abschnitt, aufweist, der die ersten Anhängeinrichtungen (18) trägt.

4. Vorrichtung nach einem der Ansprüche 1 bis 3, **dadurch gekennzeichnet, daß** die ersten Anhängeinrichtungen zwei beabstandete Laschen (34) aufweisen, die Teil der Stütze (10) sind, in die jeweils eine Gewindeachse (36) eingeschraubt ist, die koaxial angeordnet sind, um die Schwenkachse (XX) zu definieren und die nach außen gerichtet sind, wobei sie entsprechend mit Klemmorganen versehen sind, und daß die zweiten Anhängeinrichtungen zwei beabstandete Gabeln (40) aufweisen, die geeignet sind, jeweils um eine Gewindeachse und in den Raum zwischen der zugehörigen Lasche (34) und dem Klemmorgan (38) in Eingriff zu kommen.

5. Vorrichtung nach einem der Ansprüche 1 bis 3, **dadurch gekennzeichnet, daß** die ersten Anhängeinrichtungen zwei beabstandete Laschen (48) aufweisen, die Teil der Stütze (10) sind, von denen eine einen Stift (50) trägt und die andere eine Gewindeachse (52) aufnimmt, die mit einem Klemmorgan (54) versehen ist, derart, daß der Stift und die Gewindeachse koaxial angeordnet sind, um die Schwenkachse (XX) zu bilden, und daß die zweiten Anhängeinrichtungen zwei beabstandete Laschen (56, 58) aufweisen, von denen eine (56) mit einem Loch (60) für den Eingriff mit dem Stift (50) versehen ist, und die andere (58) die Form einer Gabel aufweist, die in der Lage ist, um die Gewindeachse und in den Raum in Eingriff zu kommen, der begrenzt ist zwischen der entsprechenden Lasche und dem entsprechenden Klemmorgan.

6. Vorrichtung nach einem der Ansprüche 1 bis 3, **dadurch gekennzeichnet, daß** die ersten Anhängeinrichtungen ein Rohr (62) aufweisen, das einen geschlitzten Abschnitt (64) und einen Klemmring (66) aufweist, der den geschlitzten Abschnitt umgibt, wobei das Rohr (62) sich in Richtung der Schwenkachse (XX) erstreckt, und daß die zweiten Anhängeinrichtungen eine Stange (70) aufweisen, die in der Lage ist, in das Rohr einzugreifen und in ihrer Position durch Klemmen des Klemmrings (66) blockiert zu werden.

7. Vorrichtung nach einem der Ansprüche 1 bis 3, **dadurch gekennzeichnet, daß** die ersten Anhängeinrichtungen zwei beabstandete Laschen (114, 116) aufweisen, die Teil der Stütze (10) sind, von denen eine eine Doppelratsche (118) trägt, die mit einem ersten Stift (122) versehen ist, und die andere einen zweiten Stift (124) trägt, wobei diese Stifte koaxial angeordnet sind, um die Schwenkachse (XX) zu bilden, und daß die zweiten Anhängeinrichtungen zwei beabstandete Gabeln (126, 128) aufweisen, die in der Lage sind, den ersten Stift Stift bzw. den zweiten Stift aufzunehmen.

8. Vorrichtung nach einem der Ansprüche 1 bis 3, **dadurch gekennzeichnet, daß** die ersten Anhängeinrichtungen zwei beabstandete Laschen (114, 116) aufweisen, die Teil der Stütze (10) sind, von denen eine eine Doppelratsche (118) trägt, die mit einem ersten Stift (122) versehen ist, und die andere eine zweiten Stift (124) trägt, wobei diese Stifte mit einem Verriegelungsblock (134) verbunden sind, und koaxial angeordnet sind, um die Schwenkachse (XX) zu bilden, und daß die zweiten Anhängeinrichtungen eine Stange (140) aufweisen, die in der Lage ist, in einen Schlitz (136) des Verriegelungsblocks einzugreifen und durch ein Verriegelungsorgan (138) gehalten zu werden.

9. Vorrichtung nach einem der Ansprüche 1 bis 8, **dadurch gekennzeichnet, daß** die Stütze (10) in der Lage ist, durch wenigstens eine Schraube (70; 76; 78; 82) auf einer Oberseite des festen Elements (12) des Motorrads befestigt zu werden.

10. Vorrichtung nach einem der Ansprüche 1 bis 8, **dadurch gekennzeichnet, daß** die Stütze (10) einen Abschnitt (86) aufweist, der in der Lage ist in einen freien Raum (88) zwischen dem festen Element (12) des Motorrads und einer Unterseite (90) des Tanks (16) einzugreifen und gehalten zu werden.

11. Vorrichtung nach einem der Ansprüche 1 bis 8, **dadurch gekennzeichnet, daß** die Stütze (10) in der Lage ist, durch einen Ring (98) um die Lenksäule (74) des Motorrads befestigt zu werden.

12. Vorrichtung nach einem der Ansprüche 1 bis 8, **dadurch gekennzeichnet, daß** die Stütze (10) in der Lage ist, durch einen Ring (104) um ein Element (102) des Chassis des Motorrads befestigt zu werden.

13. Vorrichtung nach einem der Ansprüche 1 bis 8, **dadurch gekennzeichnet, daß** die Stütze (10) in der Lage ist, durch Schrauben (106) auf zwei Seitenwänden (108) des Chassis (112) des Motorrads befestigt zu werden.

14. Vorrichtung nach einem der Ansprüche 1 bis 8, **dadurch gekennzeichnet, daß** die Stütze (10) in der Lage ist, durch Aufklemmen eines engen Abschnitts (110) des Tanks befestigt zu werden.

15. Vorrichtung nach einem der Ansprüche 1 bis 14, **dadurch gekennzeichnet, daß** die Stütze (10), in Abhängigkeit des festen Elements (12) des Motorrads für das sie bestimmt ist, spezifisch ausgebildet ist, während die ersten Anhängeinrichtungen (18) universell sind.

16. Vorrichtung nach einem der Ansprüche 1 bis 15, **dadurch gekennzeichnet, daß** sie eine Dämpfertrommel (28) aufweist, die geeignet ist auf den Gegenstand gesetzt zu werden, um in Anlage vorzugsweise gegen den Fülldeckel (22) des Tanks (16) in der unteren Position des Gegenstands zu kommen.

## Claims

1. Device for securing an object (20), particularly a bag, onto a motorcycle tank, the said device comprising a support (10) adapted to be integral with a fixed component (12) of the motorcycle, in front of the tank (16), and comprising locking means (36, 38; 52, 54; 62, 70, 76) intended to hold the object in a chosen position, **characterised in that** the said support also comprises first fastening means (18) adapted to cooperate in articulation with second fastening means (20) integral with the object (20), to allow the object to pivot about an axis (XX) and to selectively put it into a low position, close to the tank, or a raised position, away from the tank.

2. Device according to claim 1, **characterised in that** the support (10) is designed to stay in place on the motorcycle while the second fastening means (20) can be easily separated from the first fastening means (18) to allow the object to be fitted or removed.

3. Device according to one of claims 1 and 2, **characterised in that** the support (10) comprises a first part, or lower part (30) adapted to be secured onto the motorcycle, and a second part, or upper part, which carries the first fastening means (18).

4. Device according to one of claims 1 to 3, **characterised in that** the first fastening means comprise two separate lugs (34) forming part of the support (10) in which two threaded axles (36) are respectively secured, disposed coaxially to define the pivot axis (XX) and facing outwards, being provided with respective locking members (38) and **in that** the second fastening means comprise two separate forks (40) each adapted to be engaged about a threaded axle and in the defined space between the corresponding lug (34) and locking member (38).

5. Device according to one of claims 1 to 3, **characterised in that** the first fastening means comprise two separate lugs (48) forming part of the support (10), one of which carries a pin (50) and the other of which receives a threaded axle (52) provided with a locking member (54) so that the pin and the threaded axle are disposed coaxially to define the pivot axis (XX), and **in that** the second fastening means comprise two separate lugs (56, 58) one of which (56) is provided with a hole (60) to engage the pin (50) and the other (58), shaped like a fork, is adapted to be engaged about the threaded axle and in the defined space between the corresponding lug and locking member.

6. Device according to one of claims 1 to 3, **characterised in that** the first fastening means comprise a tube (62) having a split portion (64) and a pipe clip (66) surrounding the said split portion, the said tube (62) extending in the direction of the pivot axis (XX), and **in that** the second fastening means comprise a rod (70) adapted to be engaged in the tube and to be held in position by the pipe clip (66).

7. Device according to one of claims 1 to 3, **characterised in that** the first fastening means comprise two separate lugs (114, 116) forming part of the support (10), one of which has carries a reversible ratchet (118) provided with a first pin (122) and the other carries a second pin (124), these pins being disposed coaxially to define the pivot axis (XX), and **in that** the second fastening means comprise two separate forks (126, 28) adapted to receive, respectively, the first and second pins.

8. Device according to one of claims 1 to 3, **characterised in that** the first fastening means comprise two separate lugs (114, 116) forming part of the support (10), one of which carries a reversible ratchet (118) provided with a pin (122) and the other carries a second pin (124), these pins being integral with a locking block (134) and being disposed coaxially to define the pivot axis (XX), and **in that** the second fastening means comprise a rod (140) adapted to engage in a slot (136) in the locking block and to be retained by a locking member (138).

9. Device according to one of claims 1 to 8, **characterised in that** the support (10) is adapted to be secured by at least one screw (70; 76; 78; 82) onto an upper face of the fixed element (12) of the motorcycle.

10. Device according to one of claims 1 to 8, **characterised in that** the support (10) comprises a part (86) adapted to be engaged and retained in a free space (88) between the fixed element (12) of the motorcycle and a lower face (90) of the tank (16).

11. Device according to one of claims 1 to 8, **characterised in that** the support (10) is adapted to be secured by a clip (98) around the steering column (74) of the motorcycle.

12. Device according to one of claims 1 to 8, **characterised in that** the support (10) is adapted to be secured by a clip (104) around a component (102) of the motorcycle frame.

13. Device according to one of claims 1 to 8, **characterised in that** the support (10) is adapted to be secured by screws (106) on two lateral sides (108) of the motorcycle frame (112).

14. Device according to one of claims 1 to 8, **characterised in that** the support (10) is adapted to be pinched on to a narrow part (110) of the tank.

15. Device according to one of claims 1 to 14, **characterised in that** the support (10) is specifically made according to the fixed component (12) of the motorcycle for which it is intended, while the first fastening means (18) are universal.

16. Device according to one of claims 1 to 15, **characterised in that** it comprises a shock absorber (28) adapted to be placed on the object, to preferably abut against the filler-cap (22) of the tank (16) when the object is in its low position.
